# NEW EUROPEAN PATENT SPECIFICATION

(11) **EP 1 745 702 B2**
(45) Date of publication and mention of the opposition decision: **07.11.2018**
(45) Mention of the grant of the patent: 22.10.2008
(21) Application number: 05106563.9
(22) Date of filing: 18.07.2005
(51) Int. Cl.: A23F 5/24, A23F 5/26

(54) **Enzyme-assisted soluble coffee production**
Enzymunterstützte Herstellung löslichen Kaffees
Préparation de café soluble mettant en oeuvre des enzymes

(43) Date of publication of application: 24.01.2007
(73) Proprietor: Koninklijke Douwe Egberts B.V., 3532 AD Utrecht (NL)
(72) Inventor: Silver, Richard S., 60091, Wilmette (US); Whalen-Pedersen, Erik, 60081, Spring Grove (US); Perkins, Danielle E., 60532, Lisle (US); Plumb, Sian, CV5 8EJ, Coventry (GB); Ceriali, Stefano, OX16 2WD, Banbury (GB); Wragg, Anthony, OX16 9JN, Banbury (GB)
(74) Representative: Boult Wade Tennant LLP

(56) References cited:
- EP-A- 0 363 529
- EP-A- 0 366 837
- EP-A- 0 554 008
- WO-A1-00/69274
- JP-A- 2004 121 138
- JP-B2- 4 912 710
- US-A- 3 845 220
- US-A- 4 508 745
- US-A- 4 983 408
- US-A- 6 043 075
- SACHSLEHNER A ET AL: "Hydrolysis of isolated coffee mannan and coffee extract by mannanases of Sclerotium rolfsii" JOURNAL OF BIOTECHNOLOGY, ELSEVIER SCIENCE PUBLISHERS, AMSTERDAM, NL, vol. 80, no. 2, 23 June 2000 (2000-06-23), pages 127-134, XP004213502 ISSN: 0168-1656
- Product Specs Nescafe 100% Columbian
- Invoice No. 281049
- Declaration of Pu-Sheng Cheng Re.: Coffee
- Declaration of Pu-Sheng Cheng Re.: WO00/69274
- English Translation of D6
- Ch. 4.3 of Biochemical Engineering pg. 180-195
- English Translation of D9
- BLANC M.B. ET AL: 'Chromatographic profile of carbohydrates in commercial soluble coffees' J. AGRIC. FOOD CHEM. vol. 37, 1989, pages 926 - 930

## Description

### FIELD OF THE INVENTION

The present invention relates to a process for producing soluble coffee extracts with the aid of hydrolase enzymes and to the coffee products obtainable by this process.

### BACKGROUND OF THE INVENTION

Commercial soluble coffee is typically produced by stagewise thermal processing, a combination of wetting, extraction and hydrolysis stages, which solubilizes a high percentage of the roast and ground coffee solids. The very high temperatures required to effect thermal hydrolysis lead to off-flavours and to cost and capital intensive processes.

Various attempts have been reported using enzyme processing with carbohydrase enzymes to make soluble coffee in an attempt to improve product quality and process economics.

JP-74012710 relates to instant coffee production by treating coffee beans with cellulase-containing solutions. Hemicellulase enzyme mixtures produced in fermentation broth by fungi such as Rhizopus niveus are purified by using ion exchange resins so as to separate undesired impurities such as protease and amylase. The purified hemicellulase enzyme mixtures are then used to solubilize dry-ground roast coffee.

U.S. Patent 4,983,408 describes steam treatment of roast and ground coffee at 220°C to 250°C for 1 to 10 minutes, followed by rapid depressurization, to activate the coffee prior to treatment with at least one enzyme of the classes proteases, cellulases, pectinases, ligninases, cellobiase and lipases at 30°C to 60°C for 1 to 6 hrs. Such activation by "steam puffing" is well known for pre-treatment of lignocellulosic biomass prior to enzymatic treatment and is described, for example, in U.S. Patent 4,133,207 and U.S. Patent 4,461,648. The process produces thermal damage by-products and the yield is suboptimal and does not exceed that of the conventional thermal hydrolysis art.

SU-Patent 1597151 describes a process for making coffee extract, wherein a primary extract is produced by extracting coffee with hot water at 90°C to 100°C for 3 to 5 minutes at pH 4.7 to 5.0. The extract is separated and the solid fraction undergoes hydrolysis by β-glucanase and pectinase enzyme complex added at 0.1 to 1% per 100 g dry matter at 43°C to 63°C for 0.5 to 1 hr at pH 4.7 to 5.0 with continuous agitation. The secondary extract which is produced in this manner is then combined with the first (primary) extraction of the coffee. The process is said to give an increased soluble coffee quality and it is noted that the energy consumption is decreased.

Japanese patent application JP 2005-065558A describes a method to improve the efficiency of roasted coffee pulverisation (a process used to reduce the particle size of a solid) with the aim to obtain roasted and ground coffee particles that can be easily dispersed and/or suspended in hot water to make a beverage with smooth mouthfeel. Roasted coffee is coarsely ground to a particle size of 500 to 1,000 µm and contacted in an aqueous slurry with an enzyme, typically mannanase, to reduce the viscosity of the roasted and ground coffee suspension in water to effect a more efficient pulverisation or particle size reduction. The enzyme is then de-activated by heating the coffee suspension at up to 130°C prior to the pulverisation process. The latter finally reduces the particle size to 1 to 10 µm. No membrane separation step is employed and the reduction of off-flavours such as 5-hydroxymethyl furfural is not disclosed therein.

EP 0 366 837 discloses a process for hydrolysing extracted roasted and ground coffee.

While the above-mentioned processes have advantages, there are certain deficiencies: 1. Their inefficient coffee grounds pretreatments, such as dry milling, cause sub-optimal overall yields; 2. Steam explosion causes additional and unnecessary thermal degradation and the associated off-flavours; 3. There is no provision for the separation of the enzyme from the finished product or its re-utilisation; 4. As the reaction proceeds, smaller saccharides accumulate and these may exert "feedback inhibition" on the enzymes, reducing the reaction rate and the overall conversion.

It is the object of the present invention to provide an enzyme-assisted process for producing soluble coffee which does not have the above-mentioned deficiencies.

### SUMMARY OF THE INVENTION

The invention relates to a process for producing a soluble coffee extract, which delivers simultaneously optimal yield and reduced thermal degradation, as defined in claim 5 of the claims appended hereto.

The invention also relates to a coffee beverage composition as defined in claim 1 of the claims appended hereto.

### DETAILED DESCRIPTION OF THE INVENTION

The present invention relates to a process wherein a soluble coffee extract is produced by finely wet-milling coffee beans or ground coffee or pre-extracted coffee grounds with mannanases, or mixtures of cellulases and mannanases, and wherein the enzymes are retained in the reaction zone, via the use of a membrane device, so that the finished extract is essentially devoid of enzyme, oil or particulates and the enzyme(s) can eventually be re-used. This process can be practiced in a batch, continuous or semi-continuous mode and in a mode where the enzyme reaction and membrane separation are simultaneous and coupled or in a mode where the reaction and separation are not contemporaneous.

The potential benefits of this enzymatic process are improved flavour due to the avoidance of off-flavours produced by high-temperature processes, potentially higher yields and lower operation and capital costs. In addition, the process of the present invention makes several improvements compared with the prior art: 1. By utilizing fine wet-milling of the coffee solids and high potency hydrolase enzymes, solubilization competitive or superior to the thermal processes and the enzymatic processes of the prior art described beforehand can be achieved. 2. The enzyme is effectively immobilized within the reaction space, therefore no enzyme appears in the product and the retained enzymes may be repeatedly re-used and oil and particulate material is separated from the coffee extract within the process. 3. Since no enzyme appears in the product, an enzyme deactivation step can be avoided.

The present process can be applied to fresh roast and ground coffee or to roasted coffee grounds which have been previously extracted with water. References to practical extraction processes can be found in "Coffee Technology" by Sivetz, Desrosier (1979, The AVI publishing co. Inc.).

It is also possible to apply the present process to grounds obtained by conventional soluble coffee processing. Therein, roast coffee is typically ground and (thermally) extracted with water in multiple stages. Reference methods can be found in "Coffee Technology" by Sivetz, Desrosier (1979, The AVI publishing co. Inc.) or in EP 0 489 401. A 2-stage execution is typical in the art, wherein the first stage comprises wetting the coffee grounds, recovery of flavour and extraction of the readily soluble components (such as caffeine, minerals, simple sugars). The second stage is typically a hydrolysis stage, where large coffee bio-polymers and bound components are broken down to smaller water-soluble ones. In the first stage, the roast coffee is typically extracted with water at or below 100°C. The grounds from this extraction, referred to as "atmospheric grounds", are then extracted with superheated water at temperatures between 140°C and 180°C or, as in the process described in EP 0 363 529, water temperatures of around 220°C are used to effect the hydrolysis of mannan, one of the native coffee bio-polymers. The partially extracted grounds from the superheated extraction are typically referred to as "super-heated grounds".

If the process of the present invention is applied to partially extracted grounds, extraction can be carried out by adding the roast and ground coffee which has an average particle size of about 900 micron to a jacketed stirred tank which contains water, wherein the solids to water ratio is about 1:5. The slurry is stirred, heated indirectly to a temperature of less than 140°C, preferably in the range of 85°C to 90°C, and held at this temperature for about 30 minutes. The slurry is then discharged from the vessel and the subsequent grounds and extract separated using a filter. The extract produced is blended with the extract produced with the process of this invention from the partially extracted grounds.

The process of the present invention may, in general, be applied to roast and ground coffee comprising roasted beans which were ground to an average particle size of between 500 to 5,000 µm, preferably between 500 to 900 µm.

In addition, a flavour management pre-treatment process step can be added to the process of the present invention to recover the aroma compounds or aromatic constituents of coffee prior to the extraction and/or hydrolysis stages. Useful processes include, but are not limited to, those described in EP 0 489 401. A practical execution includes wetting roast and ground coffee with water in a vessel in a ratio of about 1:0.5 by weight. Vacuum is applied to the vessel (e.g., about 150 mbara) and then low pressure steam (approximately 2.5 barg) is applied to the bed of wetted grounds for up to 4 to 8 minutes to evaporate aroma compounds from the roast and ground coffee. Volatile compounds drawn off are condensed, for example at about 5°C, and retained to be added back to extracts or extracted solids.

The present process can be practiced on roast coffee which has been steamed-purged at low pressure to extract volatile flavour components, as described above.

It is in the purview of this invention to apply the process to any type of coffee grounds with hydrolysable matter known to those skilled in the art, such as de-oiled coffee grounds, decaffeinated coffee grounds.

In one step of the present process, fresh or pre-treated roasted coffee beans or the extracted grounds from the primary atmospheric and/or superheated thermal extraction are wet-milled to a mean particle size of 10 to 250 µm, preferably 15 to 75 µm. It may also be convenient to wet-mill coffee in stages, for example pre-milling wet or dry to 200-500 microns MPS, followed by fine wet-milling to the required range of 10 to 200 µm, but completion of the wet-milling to the preferred range in a single stage is also acceptable, as described above. Regardless from the number of stages, wet-milling is adjusted to lead to a cumulative particle size distribution obtained in which the size of 90% of the particles is below 150 µm, preferably below 100 µm, more preferably below 50 µm. Thus, according to the invention, a multi-modal distribution is ground stage-wise or continuously to the desired particle size distribution.

It is important to note that dry-milling does not yield the desired benefit. Surprisingly, it is essential to the present process that the roast and ground coffee is wet-milled. The advantages of wet-milling are clearly quantified in Example 8.

To perform the wet-milling and subsequent enzyme reaction, the grounds are diluted with water to 5 to 40% dry matter. A rotor/stator mill, for example Ross Model ME-430XS-6 (Charles Ross & Sons, Hauppage NY, USA), can be used for the first milling step, although other mills, for example colloid mills such as Charlotte SD-2 (Bradman-Lake, Charlotte NC, USA) or Dispx DRS-2000-5 (IKAUSA), are also suitable. In general, any equipment capable of wet-milling to the required particle size range is acceptable and this may include a combination of rotor-stator devices, media mills containing grinding media, cone mills or other shearing devices such as ultrasonic devices and cavitation devices. Further, for a given equipment type, the performance and resulting coffee particle size can be varied by operating parameters such as rotational speed, throughput rate of coffee, size and shape of media (e.g. in a micro mill) and screen size in a rotor/stator or similar shearing device.

The mean particle size of the grounds is reduced to 100 to 200 µm in this first wet-milling step.

The milled coffee slurry is then wet-milled in a second step, for example in a horizontal media mill containing zirconia balls of 1 to 2 mm size, for example KDL-Pilot Dynomill (Premier Mills, NY). Other suitable mills are, for example, the Attomill (Peterson Machine, Ontario) or the Enco Zinger SV-4 (Morehouse Cowles). The selection of mills given here is not intended to limit the scope of the present invention.

The mean particle size of the coffee grounds is further reduced in this second wet-milling stage to a size in the range of 10 to 150 µm, preferably 15 to 75 µm.

The particle size distribution of the wet-milled coffee comprises preferably about 90% or 95% of the particles <150 µm, more preferably <100 µm and most preferably <50 µm, so that the coffee cells are ruptured and the enzymatic reaction yields are maximized. This particle size distribution enables an effective enzymatic hydrolysis, regardless from how many wet-milling stages have been applied, or from the specific wet-mill used. It is therefore intended as a cumulative particle size distribution, achieved over the duration of the process.

The obtained coffee slurry, milled to the preferred particle size range, is then treated with mannanases or mixtures of cellulases and mannanases at a temperature where the enzyme is active, typically in the range of 25°C to 90°C, preferably 50°C to 60°C for 1 to 24 hours, preferably 4 to 24 hours to permit enzyme reaction. The enzymes can be added before or during wet-milling the grounds in order to provide an intimate mixture of the coffee slurry and the enzymes and to obtain increased yields. Of course, it is also possible to add the enzymes after wet-milling or between the two wet-milling steps described above.

Enzymes which can be used in the process of the present invention are mannanases or combinations of mannanases and cellulases which can act synergistically. Also preferred are combinations of mannanases, cellulases and proteases. It is further preferred that the enzymes are essentially devoid of dissaccharidases, i.e. mannobiases and cellobiases.

In one possible batch mode of operation, after the enzymatic reaction is at the essential completion of the reaction, the mixture is subjected to a gross separation, for example centrifugation or belt filtration, which removes most of the insoluble solids. The separated extract, still containing fine particulates, oil and enzyme protein, is recirculated through a cross-flow membrane device, which removes all insolubles and can also remove enzyme, as described below. Most or all of the enzyme remains in the membrane retentate and can be recycled to the reaction.

In a preferred mode of operation, semi-permeable membrane permeate is constantly withdrawn during the enzyme reaction, i.e. a portion of the reaction mixture is continuously circulated through the cross-flow semi-permeable membrane separation cell. The process can be operated in a semi-continuous mode, wherein permeate is withdrawn until the volume in the reaction vessel diminishes to the point where its viscosity or the pressure drop becomes high. At this point, some retentate is purged and fresh coffee slurry fed and some fresh enzyme added. The purged retentate can be discarded or can be washed to recover the enzyme which is then re-used. The enzyme in the remaining (non-purged) retentate is retained and re-used.

Alternatively, fresh feed slurry may be continuously added to the feed tank together with some enzyme with a purge drawn from the recycle stream of equal volume.

In any event, running the process in a semi-continuous or continuous mode of operation permits permeation of solubilized components out of the reaction zone before they can be further broken down.

As cross-flow semi-permeable membrane separation cell any appropriate membrane device is used, such as microfiltration or ultrafiltration membranes, with pore size less than 0.8 µm. The device can be in the form of hollow fibres, spiral wound units or cartridges or flat plates.

Surprisingly, such wide pore membranes, in the presence of fine coffee solids, retain most or all of the enzymes. If absolute removal of the enzyme is required, in one embodiment, cross-flow membrane microfiltration and ultrafiltration are used in series, with the second-stage ultrafiltration membrane having a molecular weight cut-off from 20,000 to 100,000, preferably from 30,000 to 50, 000. For example, AGT (Pall Corp., East Hills, NY) hollow fibre microfiltration membrane cartridges are useful membrane devices within the process according to the invention.

If the process has been used for treating grounds from roast and ground coffee which has been previously extracted with water and/or thermally hydrolysed, the extract obtained from the process of this invention can be combined with the extracts obtained beforehand.

In a preferred embodiment of the invention, the grounds are post-treated after the first enzymatic reaction. The post-treatment comprises a second enzymatic reaction using galactanase, where preferably galactanase is added after about 75% of the mannan has been hydrolyzed, and/or a mild thermal hydrolysis, using an extraction liquid at a temperature between 100°C and 180°C. After separating the grounds in a conventional separation step and/or according to the membrane separation of the present invention, the obtained extracts can be combined with the other extracts.

The membrane separation is preferably performed with at least 1-10% of fine insoluble coffee solids being present in the feed to the membrane cell.

In any event, the extracts obtained by the process of the present invention contain less low-molecular-weight saccharides which may impart undesirable sweetness and stickiness to the product. In addition, because the hydrolysis reactions occur at the low temperature conditions where the products of hydrolysis do not undergo further chemical reactions, such as caramelization reactions or Maillard reactions, the extracts do not contain off-flavours which are produced by high-temperature processes, such as, but not limited to, 5-HMF. It is known to those skilled in the art that high levels of 5-HMF may impart an undesirable winey or hay-like taste (page 229 of Coffee Flavour Chemistry, Ivon Flament, Wiley 2002). The 5-HMF content of the extract produced according to the process of the invention is preferably less than 1,000 ppm, more preferably less than 500 ppm, even more preferably less than 250 ppm and most preferably less than 150 ppm on a total soluble coffee solids basis. Expert tasters judge that the extracts obtained via this process do not exhibit the undesirable winey and/or caramelised aftertaste typical of conventional instant coffee extracts.

5-HMF is a preferred marker for the quality improvement of this process because it is a relatively non-volatile component and is not therefore lost during the evaporation and drying stages. However, the same improvement is noticed on other more volatile off-flavours generated via the chemical degradation reactions of the oligomers generated by the hydrolysis during the high temperature stages of the thermal processes, such as aldehydes. For example the total aldehydes content of the extracts of this invention is less than 30 µg/g solids, while it is typically greater than 1400 µg/g in thermally hydrolysed extracts.

Furthermore, the obtained extracts are devoid of enzyme residues. It was surprisingly found that the enzymes interact with the wet-milled coffee particles to such an extent that they do not permeate through the membranes - or to a much lesser extent than expected - although the pore size of the membranes would allow permeation.

The extracts further comprise preferably at least about 15% based on the total weight of soluble coffee solids of total mannose, wherein the free mannose content is less than 50% by weight of the total mannose content, preferably less than 30% and more preferably less than 20%. Finally, the extracts may contain cellooligosaccharides up to 10% on a total soluble coffee solids basis (DM, dry matter).

The advantages of the present invention can be summarized as follows:
1. Significantly higher solubilization yield than the thermal or enzymatic prior art processes, up to 65% solubilization of roast and ground coffee on an Arabica beans basis. The total mannose content is at least 15% on a total soluble coffee solids basis.
2. Low-temperature "activation" of coffee (no steam explosion or other high temperature treatment which creates off-flavours). Low level of 5-HMF and reduced processed flavour character.
3. Superior composition of matter: low monosaccharide content.
4. Product devoid of impurities (insolubles, enzyme residues).
5. Facile recycling of enzyme possible, significantly lowering costs.
6. In a semi-continuous or continuous implementation, retention of enzyme in reaction zone with simultaneous separation of coffee solubles.

The extracts obtained by the process of the present invention are used to make coffee beverages. First of all, the coffee beverage composition is absent of significant oil and insoluble particulates. By "absent of significant oil" is intended a level of coffee oil inferior to about 2% on a soluble coffee solids weight basis, more preferably inferior to about 1%. It comprises a reduced level of 5-HMF as mentioned above and it comprises preferably at least 15% by weight of coffee solids total mannose the major part of which does not consist of mannose as mentioned above but of mannooligosaccharides with a degree of polymerization comprised between 2 and 8. The coffee beverage composition preferably also comprises cellooligosaccharides.

Where atmospheric grounds are used as the feed to the process of this invention, the extract produced may be combined with the extract obtained during the atmospheric extraction stage. The extracts are combined based on the ratio of extracted roasted yields from each stage. The combined extract is then concentrated, aromatised and dried as is conventional in the art.

The coffee beverage composition can be dehydrated, such as a soluble coffee or dry mix composition, or it can be a ready-to-drink coffee product, a liquid mix composition, a frozen composition or a liquid concentrate composition. The composition of this invention can also be used in non-beverage applications, such as instant desserts or confectionery products etc.

The processes to make those coffee compositions from soluble coffee extracts are known to a person skilled in the art.

The invention will now be illustrated by specific examples which describe preferred embodiments of the present invention. They are not intended to limit the scope of the invention.

### EXAMPLES

### Example 1

### Processing Stages of The Invention

Arabica coffee beans in the blend of Colombian:Central:Brazil were roasted to a colour of 6.5 Lange in a Probat drum roaster. The roasted beans were ground to an average particle size of 900 micron using a Mahlkoenig plate mill. Unless otherwise stated, these roasted beans were the source material for all of the following examples.

The roast and ground coffee was added to a jacketed stirred tank (working capacity 200 litres) containing water. The solids to water ratio was 1:5 (20 kg coffee : 100 kg water). The slurry was stirred, heated indirectly to a temperature of 85°C to 90°C and held at this temperature for 30 minutes. The slurry was then cooled to 25°C using chilled water supplied at 10°C to the jacket. The slurry was discharged from the vessel and the subsequent grounds and extract separated using a coarse filter mesh.

Using this method, approximately 25% by weight of the coffee bean is extracted as measured by soluble solids.

The extracted grounds from the primary atmospheric extraction contain ca. 30 to 35% DM. These grounds were milled in a 2-stage process. The grounds were diluted with water to a target of ca. 10% DM. The first milling stage used the Ross Model ME-430XS-6 (Charles Ross & Sons, Hauppage NY, USA) rotor/stator mill. The dilution water, 29.09 kg, was placed in a feed tank and recirculated through the mill at a rate of 11 to 19 lpm. The coffee grounds, 15.86 kg, were gradually added to the recirculating water using a screw feeder over a 5 min period and milling was continued for ca. 2 min after all the coffee was added. Cooling water was circulated through the jacket of the feed tank to maintain slurry temperature below 40°C. This rotor/stator milling reduced the mean particle size (MPS) to 175 µm (target 100 to 250 µm). Total collected slurry was 45.25 kg, slightly more than the feed due to water in the equipment piping.

The particle size is determined using the following method: The coffee material is diluted about 1:10 with purified MilliQ™ water and stirred at 400 rpm for at least 15 minutes. This dispersion is then added dropwise to the sample reservoir of a Horiba LA-900 laser light diffraction particle size analyzer until the obscuration is below 92% transmittance. The particle size is measured after one and three minutes of circulation and stirring at the lowest rate. In this document, the particle size distribution is described by the mean particle size (MPS) which is defined as D43, the volume-weighted mean.

The Ross milled coffee slurry was then fed to a second-stage horizontal media mill (KDL-Pilot Dynomill (Premier Mills NY, USA)) containing zirconia balls of size 1 to 2 mm. The coffee slurry in the mill feed tank was kept agitated to prevent settling of the grounds and fed to the mill at a rate of 10% total mill-volumes/min using a peristaltic pump (Watson-Marlow). The mill was cooled by circulating cooling water through the jacket to maintain outlet temperature below 45°C. The micromilled coffee slurry has a MPS of 57 µm (target range 15 to 75 µm).

The micromilled slurry, 12.27 kg, was placed in a conical-bottomed jacketed closed stainless steel holding vessel with scraped-surface agitation. The material was heated to 55°C and enzymes, a combination of β-mannanases and cellulases (β-glucanases), added, namely 0.0275% Mannaway 25 L, a single-component bacterial beta-mannanase (Novozymes, Franklinton, NC USA), and 0.0275% RS-103, a multi-component fungal (Trichoderma reesei) preparation containing both beta-mannanase and beta-glucanase activities (Iogen, Ottawa, Canada) based on 10% DM coffee slurry. The slurry was held with mild agitation at 55°C for 16 hrs to permit enzyme reaction. Several samples were taken during the reaction course. At the end of this period the mixture was heated to 90°C and then immediately cooled to 35°C. A net of 10.59 kg of reacted slurry was recovered from the tank. This slurry contained 9% total dry solids and 4.81% dissolved solids, with the latter measured by filtering an aliquot of slurry through a 0.7 µm GMF syringe filter. Solids in the slurry and filtrate were measured with a CEM microwave analyzer, 100% power setting. This represents an incremental extracted roasted yield of 38%.

The mixture was centrifuged in batch mode using a Beckman JE centrifuge with the slurry in 1 litre jars and spun for 10 min at 2,000 rpm. The centrifugation removes most of the insoluble solids, giving a cake or pellet comprising about 32% of the initial slurry mass and a supernatant comprising 68%. A total of 10,453.1 g slurry was centrifuged, yielding 7,064.3 g primary supernatant, the latter containing 5.9% total solids (DM) and 4.81% dissolved solids (as measured in 0.7 µm membrane filtrate). The pellet was repulped in a volume of water equal to the supernatant removed and recentrifuged, giving wash supernatant. The latter contained 2.27% total solids and 2.01% dissolved solids. The primary and wash supernatants were combined.

The centrifuge supernatants contain fine insoluble particles of fibrous material and oil which are not removed by the centrifugation, in addition to residual enzyme protein. The combined supernatant, 13,926.5 g, was clarified using an AGT hollow fibre microfiltration unit, 2,600 cm² total surface area nominal 0.6 µm pore size. The feed material was recirculated from a feed tank through the membrane cartridge using a Waukesha 15 PD pump at an initial rate of 5.86 kg/min, and clarified permeate was drawn off at a controlled rate of about 100 cc/min. The feed was circulated to essential exhaustion, i.e. to the point where insufficient material remained to pump. The microfiltration permeate was clear, transparent and free of visible oil and particulate matter.

A sample of permeate was assayed for residual mannanase activity using a viscometric assay. A 25 µl aliquot of permeate was mixed into 30 ml of 1% locust bean gum solution, and the viscosity was monitored at 21°C using a Brookfield RVT viscometer, spindle 6, 20 rpm. Viscosity showed no change (ca. 2.650 PI) for over 1 hr, indicating no enzyme activity. In contrast, an aliquot of reaction mixture showed a rapid decrease in viscosity with a slope of 0.055 PI/min A sample of permeate was assayed for residual cellulase activity in the same manner, using a solution of 2% carboxymethylcellulose (grade 7MF, Hercules, Wilmington DE, USA). Likewise, no activity was found.

An aliquot of membrane permeate was freeze-dried and analyzed for both free and total carbohydrates.

For total carbohydrate analysis the sample is hydrolyzed using trifluoroacetic acid and then detection carried out using a Dionex ED40 pulsed amperometric detector.

For free carbohydrate analysis an internal standard of 2-deoxy-D-glucose and water are added to the sample and analysed using a Dionex ED40 pulsed amperometric detector.

The atmospheric extract and extract produced from the process of this invention were recombined. This sample was also measured for free and total carbohydrates using the methods described above.

Samples were analyzed for 5-HMF as a measure of thermal degradation. The analyte is extracted and dissolved using an ultrasonic water bath at 30°C and following solid phase partial purification, the 5-HMF content is analyzed using HPLC. Results are summarized in the table below.

The difference between total mannose and free mannose represents the content of mannooligosaccharides. Additional analysis carried out using a capillary electrophoresis technique after derivatisation of the mannan oligomers with ANDS (7-amino-naphthalene-1,3-disulphonic acid (mono potassium salt)) and sodiumcyanoborohydride, indicates that the degree of polymerisation is between 2 and 8.

Likewise, the difference between total and free glucose represents the content of cellooligosaccharides.

| | **5-HMF (ppm)** | **Free Glucose g/100g** | **Free Mannose g/100g** | **Total Glucose Content (g/100g)** | **Total Mannose Content (g/100g)** |
|---|---|---|---|---|---|
| Extract produced according to the invention | 62 | 2.9 | 3.4 | 10.1 | 42.7 |
| Recombined Product | 62 | 1.7 | 2.0 | 6.4 | 30.3 |

The table above shows that there is essentially no significant generation of 5-HMF during the process of this invention.

The total aldehyde level was measured in the extracts from the process of this invention and compared to extracts produced using thermal hydrolysis. To measure the aldehydes content, level the extract is transferred to a vial, diluted with deionised water and heated, the headspace measured using gas chromatography. The results are expressed on a total soluble coffee solids basis. The data, shown in the following table, clearly show that less aldehydes are generated as a result of the process of this invention.

| | **Total Aldehydes Level (µg/g)** |
|---|---|
| Extract produced via thermal hydrolysis | 1555 |
| Extract produced by process of this invention | 25 |

### Example 2

### Simultaneous enzyme reaction and membrane separation

The micromilled slurry of Example 1, 7.18 kg, was put into a round-bottomed stainless steel jacketed vessel with scraped surface agitation. Under gentle agitation, the mixture was heated to 55°C and the identical enzymes as in Example 1 were added, 0.055% of each. The mixture was held with agitation for 1 hr, then recirculated through a microfiltration cartridge, Sepro (Oceanside, CA) PVDMFB-2514-46F, nominal 0.7 µm mean pore size, using a Waukesha (SPX, Delavan, WI) 30 PD pump at a rate of about 5.4 kg/min. At 73 min after enzyme addition, the permeate valve on the membrane cartridge was opened and permeate flow was adjusted to about 20 ml/min. As permeate collection continued, the tank mixture was agitated and held at 55°C. Permeate collection continued for 75 min, during which time a total of 1,361.1 g permeate was collected, containing 3.32% dissolved solids.

A sample of permeate was analyzed for residual cellulase and mannanase activity using the analysis method described in Example 1. The permeate was found to have no cellulase activity. This is surprising since it is reported that the cellulase enzymes of Trichoderma reesei, the organism which produces RS103 enzymes, are in the molecular weight range of 44-48,000 (J. Biotechnol. V57, 191 (1997)) which should easily pass through the microfiltration membrane. The permeate had mannanase activity of about 39% of the unfiltered reaction mixture: slope (0.021 PI/min vs. 0.054). It is surprising that the enzyme is removed (rejected) by membranes with nominal pore size considerably larger than the molecular weight of the enzyme. It is presumed that this removal is enabled by binding the enzymes to insoluble coffee particulates and/or formation of aggregates by the enzymes.

### Example 3

### Reaction with mannanase only

A process was conducted as in Example 1 with the only exception being that the sole enzyme added was the β-mannanase, Mannaway, at a rate of 0.0275%. The reaction process was the same as Example 1. The final slurry after 16 hr reaction, heating and cooling as in Example 1, contained 9.53% total solids and 4.49% dissolved solids. This represents 44.6% calculated solubilization of the total solids in the coffee slurry and incremental extracted roasted yield of 33.5%.

### Example 4

### Removal of Enzyme Via Ultra-filtration

The microfiltration permeate of Example 2 above, which contained partial residual mannanase activity, was refiltered through microfiltration and ultrafiltration membranes of various molecular weight cut-off (MWCO) and materials to determine requirements for complete removal of mannanase activity. The results are summarized below the following table:

| **Material** | **Filtration MWCO⁽¹⁾** | **Mannanase PI/min** |
|---|---|---|
| Reaction mixture | None | 0.054 |
| MF Permeate | None | 0.021 |
| MF Permeate | 30,000 | 0 |
| MF Permeate | 100,000 | 0.0051 |
| Reaction mixture | 100,000 | 0.0038 |
| ⁽¹⁾ MWCO = molecular weight cut-off (nominal) of membrane 30,000 MWCO ultrafiltration membrane reduced the mannanase activity in the permeate to zero. A 100,000 MWCO membrane removed part of the mannanase activity and was somewhat more effective for enzyme removal from reaction mixture, where coffee solids were present, than from MF permeate. | | |

### Example 5

### a) Enzyme Membrane Retention-Effect of Coffee Solids

RS-103 (Iogen, Ottawa, CA) enzyme was diluted 1:100 in the following media:
(1) Deionized water
(2) Micromilled slurry of atmospherically extracted grounds, 8.365% TS (total solids), MPS 65 microns
(3) Slurry of Yuban® spent atmospherically extracted grounds (Bunn-2000 brewer), coarse grind (ca. 850 microns)

The three samples above were membrane filtered shortly after preparation using Pall "Nanosep" centrifugal filters, nominal 100,000 MWCO (C) and 30,000 MWCO (R). The samples were centrifuged until essentially all of the liquid had permeated the membrane. The filter permeates from the C membrane were all analyzed for enzyme activity using viscometric assays as described in Example 1.

### Cellulase activity

As summarized in the table below, filtration through a 100,000 MWCO membrane without coffee solids (1C) present gave some reduction in cellulase activity while filtration in the presence of micromilled coffee solids (2C) reduced cellulase activity by about 2/3. Coarse coffee solids (3C) were relatively ineffective in reducing enzyme activity. Filtration of the sample (1) through the 30,000 MWCO membrane (1R) removed all cellulase activity.

| | **Slope PI/min** |
|---|---|
| Unfiltered | -0.03476 |
| 1C (no coffee) | -0.025 |
| 2C (micromilled) | -0.0117 |
| 3C (coarse) | -0.0288 |
| 1R (UF) | 0 |

### Mannanase Activity

As summarized in the table below, micromilled coffee solids (2c) also enhanced the removal of mannanase activity by the 100,000 MWCO membrane.

| | **Slope PI/min** |
|---|---|
| Unfiltered | -0.550 |
| 1C (no coffee) | -0.573 |
| 2C (micromilled) | -0.347 |
| 3C (coarse) | -0.611 |
| 1R (UF) | -0.0035 |

### Example 6

### a) Addition of Protease Enzymes to Micromilled Partially Extracted Coffee Grounds

To portions of micromilled slurry of atmospheric grounds, similar to Example 1, were added the following enzyme combinations:
A) None
B) Identical to Ex. 1
C) Identical to Ex. 1 plus 0.0275% Acid Protease II (Amano).

Flasks containing these mixtures were shaken at 100 RPM and at 55°C for 16 hr, then processed in an identical manner to Example 1. The solubilization yields were:
A) 20.2%
B) 44.0%
C) 48.5%

The addition of protease gives incremental yield above the carbohydrase enzymes.

### Example 7

### Use of Different Feed Stocks for Enzyme Assisted Hydrolysis Stage

### a) Untreated Fresh Roast and Ground Coffee (R&G)

The starting material for this test was a blend of roasted Arabica beans (Columbian/Central/Brazil). The coffee was dry-milled to ca. 500 micron MPS, then diluted with water to approximately 10% TS and wet-micro-milled using a KDL pilot mill containing 1 mm zirconia beads. The coffee slurry was fed to the mill at a rate of 0.044 mill-volumes/min using a peristaltic pump.

Aliquots of the micro milled slurry were dispensed into flasks and enzymes added. Enzymes used were of identical type and concentration as Example 1. The flasks were shaken at 55°C and 100 rpm for 16 hr, heated to 95°C, immediately cooled to 20°C and processed in an identical manner to Example 1, with the exception that for microfiltration a Sepro PVDF-MF membrane (ca. 0.5 micron MWCO) in a RO-Ultratech (Fallbrook, CA) flat-plate cross-flow device was used.

### b) Steamed Roast & Ground Coffee

The starting material for this test was a blend of Arabica beans (Columbian/Central/Brazil). The whole beans were ground to an average particle size of 800 micron using an MPE4555 Roller mill. The grounds were then pre-wetted with water (approx 40% by weight of the beans) and then steamed with low pressure steam (1-2 barg) for 8-10 minutes to evaporate volatile flavour compounds from the roast and ground coffee. This volatile stream is condensed and usually added back to the final extract prior to drying. After this steaming process the solids were 2-stage wet milled identically to Example 1, with the exception that the feed rate to the second stage was 0.024 mill-volumes/min.

Aliquots of the Ross and micro milled slurries were dispensed into flasks. Identical enzymes and processing conditions as Example 7a were used.

### c) Atmospherically Extracted Grounds

The starting material for this test was grounds identical to Example 1. The grounds were 2-stage wet milled as in Example 1, with the exception that the first stage was in a Dispax mill fitted with fine/superfine/superfine screens (IKA USA). The Dispax-milled grounds had a MPS of 224 microns, while the micromilled grounds had a MPS of 57.7 microns.

### Time course data for Mannan hydrolysis

For the experiment described below the starting material was atmospherically extracted grounds which were wet milled in 2 stages as described in Example 7c above.

Four aliquots of the micro milled slurries were dispensed into flasks and a mixture of enzymes of identical type and composition of Example 1 were added to the micro milled slurry. The flasks were shaken at 55°C and 100 rpm for 4, 8, 12 and 16 hrs. At the end of the specified reaction time, the flasks were processed as previously described.

The table below shows the percentage of the total Mannan hydrolyzed** at various time intervals.

| **Time (hours)** | **% of total Mannan hydrolyzed*** |
|---|---|
| 4 | 65.20 |
| 8 | 78.51 |
| 12 | 82.43 |
| 16 | 84.65 |
| * % value is based on the mannan in the final product compared to mannan in starting material; | |
| ** Samples analyzed using a total carbohydrate method, where the sample is hydrolyzed using acid and then detection carried out using a Dionex ED40 pulsed amperometric detector. | |

Even at 4 hours, a considerable proportion of the Mannan has been hydrolyzed.

### d) Superheated Grounds

The starting material for this test was superheated grounds left after extraction with superheated water (approx. 180°C, "superheated grounds").

The superheated grounds were diluted with water to approximately 10% TS and wet-milled in two stages as previously described in Example 7c. The effluent from the Dispax mill had a MPS of 73.5 microns and 27.9 microns from the micromill.

Aliquots of the micromilled slurry and one of Dispax slurry were dispensed into flasks and enzymes added, the same type and levels as in Example 7a. The flasks were shaken at 55°C and 100 rpm for 16 hr, heated to 95°C, immediately cooled to 20°C, then processed as in Example 7a. Combinations of mannanase plus cellulase enzymes tested gave 14.7% incremental solubilization (based on mass of starting superheated grounds) for the micromilled slurry and 13.6% for the Dispax slurry. Use of mannanase alone (0.55%) gave 4.1% solubilization in micromilled grounds while a micromilled control without enzyme gave 2.8%.

### Results

The following tables show the yields achieved from the different feed stocks at various mean particle sizes.

### Using an enzyme complex containing a 50:50 mixture of enzyme with β-Mannanase activity and enzyme with β-Mannanase plus Cellulase activity, identical to Example 1:

| **Example** | **Feedstock** | **% Yield** |
|---|---|---|
| 7a | Untreated Roast & Ground | 60.5 |
| 7b | Steamed Roast & Ground | 59.2 |
| 7c | Atmospherically extracted Grounds | 62.5 |
| 7d | Superheated Grounds | 55 |

### Using an enzyme with β-Mannanase activity only, identical to Example 3:

| **Example** | **Feedstock** | **% Yield⁽¹⁾** |
|---|---|---|
| 7c | Atmospherically extracted Grounds | 59.5 |
| 7d | Superheated Grounds | 50.1 |
| ⁽¹⁾ % Yield defined as the percentage of soluble material extracted from the roast coffee beans | | |

The following table shows the mannan available for hydrolysis and the quantity of mannan hydrolyzed when different starting feed materials are used:

| **Starting feed material for enzyme assisted hydrolysis** | **Arabinogalactan in feed material (g)** | **Mannan available for hydrolysis (g)** | **Mannan hydrolyzed (g)** | **Mannan remaining (g)** |
|---|---|---|---|---|
| Roast & Ground | 9.1 | 20.5 | 17.2 | 3.3 |
| Steamed Roast & Ground | 9.1 | 20.5 | 16.7 | 3.8 |
| Atmospheric Grounds | 6.8 | 19.8 | 16.4 | 3.4 |
| Superheated Grounds | 0.4 | 7 | 0 | 7 |

As can be seen from the table above, the extraction of Mannan is less effective when grounds depleted in Arabinogalactan are used as a feed material to the enzyme assisted hydrolysis process.

### Synergistic Action of Enzymes

When mixtures of enzymes comprising cellulases and mannanases are used to treat wet-milled roast coffee, the effect of the mixture on solubilization yield is additive, i.e. the incremental yield obtained by treating with cellulase plus mannanase can be accounted for entirely by the increase in cellooligomer concentration of the extract; there is no significant change in mannooligomer concentration. This would be expected as based on the teachings of the prior art. However, it has been found that preferred combinations of cellulases plus mannanases give an apparently synergistic reduction in the physical volume of the insoluble residue obtained after separation of the extract, for example, by a bulk separation process such as centrifugation, as shown in the table below. For example, adding the enzyme mixtures defined hereafter FM and FC to the BM increases solubilization yield only 13.8% but residue volume is reduced by 32%. Smaller physical volume of residue would facilitate separation and recovery of the extract.

| **Enzyme Mixture** | **Residue Volume %** | **Relative Solubilization Yield** |
|---|---|---|
| Control (none) | 65 | 1 |
| BM | 53 | 1.59 |
| FM + FC | 40 | 1.27 |
| FC | 57 | 1 |
| BM + FM + FC | 37 | 1.81 |
| FM = mannanase component of RS-103; | | |
| BM = Mannaway 25L: | | |
| FC = cellulase component of RS-103; | | |
| Enzymes all at 0.0275% in mixture of micromilled atmospheric grounds, 55°C, 16 hr reactions; | | |
| Residue volume is % of initial volume after centrifugation as previously described. | | |

### Example 8

### 8a. Atmospheric Grounds - Comparison of Wet vs. Dry Milling

In Example 1 it was shown that when atmospheric grounds were wet milled to the preferred particle size of 15-75 microns and incubated with agitation for 16 hr with the preferred enzyme combination, 0.0275% each of Mannaway plus RS-103, up to 51.1% solubilization can be achieved.
i. A sample of the untreated coarse atmospheric grounds of Example 1 was lyophilized, and the dried material dry-milled using an MPE 660 Ultrafine Granulator to a mean particle size (MPS) of 70 micron. This material was slurried in water to 10% total solids.
ii. The same wet atmospheric grounds were wet Dispax-milled, at a total solids of about 10%, as described in Example 7c.
iii. The Dispax-milled grounds of ii. were micromilled as previously described in Example 7c at a feed rate of 0.11 mill-volumes/min and a single pass through the mill
iv. The Dispax-milled grounds of ii. were micromilled as previously described in Example 7c at a feed rate of 0.11 mill-volumes/min but recycled through the mill for 40 min.

To all of the ca. 10% total solids slurries was added enzymes identical to Example 1, and the mixtures held at 55°C for 16 hr, then processed as in Example 1.

As shown in the following table, wet milling was far more effective than dry milling for enabling the enzymatic solubilization of atmospheric grounds, and as the wet-milled MPS approached the preferred range, the solubilization percentage increased. Dry milling of atmospheric grounds, even to the preferred particle size, was not effective in enabling enzymatic solubilization.

| **Case** | **Mill** | **Enzyme** | **Shaking^{(a)}** | **MPS micron** | **Solubilization %** |
|---|---|---|---|---|---|
| i | Dry | 0 | + | 70 | 12 |
| i | Dry | + | + | 70 | 15.4 |
| ii | Dispax | 0 | | 224 | 17.1 |
| ii | Dispax | + | | 224 | 31.2 |
| iii | Micromill 1 Pass | 0 | - | 104.4 | 18.05 |
| iii | Micromill 1 Pass | + | - | 104.4 | 40.02 |
| iv | Micromill Recycle | 0 | - | 65.5 | 17.9 |
| iv | Micromill -Recycle | + | - | 65.5 | 46.0 |
| (a) Orbital shaker, 100 RPM | | | | | |

### 8b. Roast Coffee - Comparison of Wet vs. Dry Milling

The starting material for this comparison is Arabica coffee beans.

For the dry milling example the coffee was dry-milled using an MPE 669 Ultrafine Granulator. The ground coffee was then mixed with water to achieve a 10% slurry and left to steep for 1 hour before carrying out the enzyme hydrolysis.

For the wet milling example the coffee was dry-milled to a mean particle size (MPS) of about 500 µm, and then diluted with water to approximately 10% total solids (TS) and wet-micro milled using a KDL pilot mill containing 1 mm zirconia beads. The coffee slurry was fed to the mill at a rate of 0.044 mill-volumes/min using a peristaltic pump.

Alternatively, the 500 micron coffee was Dispax-milled as in Example 7c, adding the coffee at 10% TS to the circulating liquid and sampling the milled slurry both immediately after the solids were added ("one-pass") and after 5 min recycle through the mill.

Aliquots of the dry and wet milled slurries were dispensed into flasks and enzymes added. Enzymes used were Identical in type and concentration to Example 1. The flasks were shaken at 55°C and 100 rpm for 16 hr and then processed as previously described.

Solubilization on original R&G basis is shown as Yield % in the following table. This yield is defined as the percentage of soluble material extracted from the roast coffee beans.

| **Mill Type** | **Mill** | **Mode** | **MPS micron** | **Enzyme⁽¹⁾** | **Solub. Yield%** |
|---|---|---|---|---|---|
| 1a. Dry | Dyno | - | 77 | 0 | 30.1 |
| 1b. Dry | Dyno | - | 77 | + | 35.9 |
| 2a. Wet | KDL | 1 pass | 32 | 0 | 32.1 |
| 2b. Wet | KDL | 1 pass | 32 | + | 57.4 |
| 3a. Wet | KDL | 2 pass | 77 | 0 | 31.7 |
| 3b. Wet | KDL | 2 pass | 77 | + | 60.5 |
| 4a. Wet | Dispax | 1 pass | 229 | 0 | 26.5 |
| 4b. Wet | Dispax | | | + | 34.3 |
| 5a. Wet | Dispax | 5 min recycle | 133 | 0 | 27.6 |
| 5b. Wet | Dispax | 5 min. recycle | 133 | + | 42.0 |
| (1) Where (+), identical enzyme type and concentration as Example 1. | | | | | |

The enzymatic solubilization of the wet-milled coffee is significantly greater than that achieved through dry milling.

### 8c. Wet Milling in Presence of Enzymes

A slurry of atmospheric coffee grounds was 2-stage wet milled as in Example 7c., with the following exceptions:
i. The slurry was recycled through the second stage KDL-pilot micromill (mill effluent returned to feed vessel) for 30 min, at a rate of 0.14 mill-volumes/min.
   Aliquots of the milled slurry were dispensed into flasks and enzymes identical to Example 1 were added to the flasks. The flasks were agitated at 100 RPM for 16 hr, then processed identically to Example 1.
ii. Enzymes identically to Example 1 were added prior to the second-stage micromilling, then the slurry was recycled through the KDL-pilot mill for 30 min at 0.14 mill-volumes/min, maintaining temperature at 45°C by feeding cooling water to the mill jacket. The milled slurry was then dispensed into flasks which were shaken at 100 RPM for 16 hr, then processed as in Example 1.

The solubilization yield, based on total slurry solids, was 45.8% for (i) and 49.8% for (ii). A no-enzyme control from (i) was 20.4% solubilized. Adding the enzymes prior to milling provided incremental yield, presumably by improving the contact between the enzymes and coffee.

### Example 9 (Comparative)

### Reduction to Practice of SU1597151 - A Method for Making Coffee Extract (Moscow Technology Institute for Food Industry)

The starting material for this comparison was a blend of Robusta beans ground to an average particle size of 500 µm. Approximately 100 g of ground coffee was mixed with water in a ratio of 1:20, heated to 90°C and held at this temperature for 5 minutes. The grounds and extract were separated by filtration through Whatman #1 filter paper.

The grounds from this first stage undergo a second extraction using an enzyme complex to assist hydrolysis. The enzyme complex was a 50:50 mix of pectinase and β-glucanase. Water was added to the grounds at a ratio of 20:1 and enzyme complex at a level of 1% per 100 grams dry matter (DM). This resulting slurry was held at 50°C for 60 minutes with continuous agitation. The extract and grounds are separated by filtration through Whatman #1 filter paper.

The next stage of the process uses the extracts produced from the previous two extractions as the extraction medium instead of water to carry out the extraction on the fresh roast and ground coffee. Again the ratio of extract to coffee grounds is 1:20. The extraction conditions are as for the previous example (heated to 90°C and held at this temperature for 5 minutes). The above procedure was carried out using a grind size of approximately 500 µm. Following the extraction stage the grounds and the extracts were separated by filtration through Whatman #1 filter paper.

The yields achieved from this process are shown in the table below:

| | **1.0 % pectinase & β-glucanase** |
|---|---|
| Yield from 1^{st} & 2^{nd} extraction | 28.8 |
| Yield from extraction using 1^{st} & 2^{nd} extracts | 31 |

The above experiments were also repeated using a blend of Arabica beans. The yields achieved from these experiments are shown in the table below. The yield achieved is considerably less than that achieved by the process of this invention.

| | **1.0 % pectinase & β-glucanase** |
|---|---|
| Yield from 1^{st} & 2^{nd} extraction | 23.9 |
| Yield from extraction using 1^{st} & 2^{nd} extracts | 25.4 |

### Example 10 (Comparative)

**Reduction to Practice of** US Patent 4,983,408 - **Method for Producing Coffee Extracts (Colton; Ralph L)**

Arabica coffee beans were roasted and extracted as described in Example 1. The extracted grounds from the atmospheric extraction contain ca. 30-35% Dry Matter (DM). The partially extracted grounds were transferred to a pressure vessel where they were subjected to direct steam injection at 24 bar for a period of 2 minutes.

A 50 g sample of the steamed primary grounds was diluted 1:2 with 100 g de-ionized water and treated with 0.029% of a Mannanase activity enzyme and 0.029% combined Cellulase/Mannanase activity enzyme. A duplicate sample for the steaming treatment was marked as control and treated with 0.058% de-ionized water. The samples were mixed and held static at 55°C for 20 hours. Samples were then heated to 95°C to deactivate the enzymes, cooled to room temperature and centrifuged at 5,000 rpm for 10 minutes. Supernatant was collected, and a portion passed through both 0.45 micron and 0.80 micron syringe filters (Supor).

Extraction yield from the enzyme hydrolysis stage was calculated based on the solids concentration of the 0.45 micron filtrates the quantity of solids in the steamed grounds. The yields from the hydrolysis stage were then added to the reported extraction yields from steaming and atmospheric extraction and reported as the total yield for this process in the table below.

A second example (10b) was reduced to practice whereby roast and ground coffee of Arabica blend (Colombian/Central/Brazil) was mixed with water in the ratio of 1:2 (water to coffee) and then steamed at 25 barg for 4 minutes. The steamed grounds were then reacted with RS103 at 45°C for 3 hours. The resulting yield and 5-HMF level are included in the following table.

| | **Extracted Yield (%)** | **Total Mannose (g/100 g)** | **5-HMF (ppm)** |
|---|---|---|---|
| Example 10a: Steamed explosion of atmospherically extracted grounds (with enzyme) | 53 | 17 | 2556 |
| Example 10a: Steamed explosion of atmospherically extracted grounds (without enzyme) | 47.6 | 14.5 | 1937 |
| Example 10b: Steamed explosion of Fresh roast & ground (with enzyme) | 46 | 16.5 | 6773 |
| Example 10b: Steamed explosion of fresh roast & ground (without enzyme) | 46 | 15.2 | 6725 |

### Example 11

### Sensorial evaluation of the base products of this invention

The aim of this example is to compare sensorially the quality of the extracts obtained by the process of this invention to the quality of extracts obtained by thermal hydrolysis.

An atmospheric extraction was carried out as described in Example 1, using the same Arabica roasted and ground coffee blend. During this stage, approximately 25% by weight of the coffee bean was extracted as measured by soluble solids. The grounds resulting from this extraction were then treated with enzymes as described in Example 1. Approximately 38% by weight of the coffee bean is extracted as measured by soluble solids. To produce a finished product, the extract from both stages was blended in a weight ratio 1:1.5 based on soluble solids (extract from atmospheric extraction : extract from enzymatic treatment).

The soluble solids content of the combined extract was measured at 5% and was then concentrated to 30% soluble solids using a Heidolph rotary evaporator, this operation was carried out under vacuum. The concentrated extract was then freeze dried resulting in a product with final moisture content of 1.3%.

Extract from a stagewise extraction and thermal hydrolysis process from the same Arabica coffee blend was concentrated and dried using the same equipment and conditions as described in the paragraph above. The final moisture content of this product was 1.7%.

The dried products were reconstituted with 75°C water to give a brew with concentration of 1.5% soluble solids. Expert coffee tasters evaluated the reconstituted products and found the product of this invention to be cleaner, less winey and with less processed off-flavours than the product made using the conventional thermal hydrolysis process.

## Claims

1. Coffee beverage composition being devoid of significant contents of oil and insoluble particulates, comprising
(a) at least 15% based on the total weight of soluble coffee solids of total mannose, wherein the free mannose content is less than 50% by weight of the total mannose content, and
(b) less than 250 ppm on a total soluble coffee solids basis of 5-hydroxymethyl furfural (5-HMF),
wherein the composition is a soluble coffee.

2. Composition according to claim 1, wherein the free mannose content is less than 30%, preferably less than 20% of the weight of total mannose.

3. Composition according to any one of claims 1 to 2, also comprising cellooligosaccharides up to a content of 10% on a total soluble coffee solids basis.

4. Composition according to any one of claims 1 to 3, being essentially devoid of enzyme.

5. Process for producing a soluble coffee extract, comprising the steps:
(i) combining roast and ground coffee with water,
(ii) adding mannanases or mixtures of cellulases and mannanases,
(iii) wet-milling to a mean particle size of 10 to 250 µm,
(iv) treating the reaction mixture by exposing it to a temperature where the enzyme is active, and
(v) circulating the reaction mixture through a cross-flow semi-permeable membrane separation device where the soluble coffee extract is obtained as permeate and wherein the membrane pore size is less than 0.8 µm.

6. Process according to claim 5, wherein steps (ii) and (iii) can be carried out in any order, preferably step (ii) is carried out before step (iii).

7. Process according to claim 5 or 6, wherein the cumulative particle size distribution of the wet-milled roast and ground coffee comprises about 90% of the particles below 150 µm, preferably below 100 µm and most preferably below 50 µm.

8. Process according to any one of claims 5 to 7, wherein a multi-modal distribution is ground stage-wise or continuously to the desired particle size distribution.

9. Process according to any of claims 5 to 8, wherein the roast and ground coffee comprises roasted beans which were ground to an average particle size of between 500 to 5,000 µm.

10. Process according to claim 9, wherein the ground coffee is pre-treated to recover aroma compounds which are retained to be added back to later on obtained extracts or extracted solids.

11. Process according to any of claims 5 to 8, wherein the roast and ground coffee has been previously extracted with water and/or thermally hydrolysed.

12. Process according to claim 11, wherein the soluble coffee extract obtained from the spent grounds in step (v) is combined with the soluble coffee extract which was obtained in the extraction process of the fresh roast and ground coffee.

13. Process according to claims 11 or 12, wherein the extraction process is conducted at a temperature of less than 140°C, preferably between 85°C and 90°C.

14. Process according to any one of claims 5 to 13, wherein the obtained soluble coffee extract is processed to make soluble coffee or liquid coffee.

15. Process according to any one of claims 5 to 14, wherein the wet-milling is performed in two stages, the first stage leading to a mean particle size of 100 to 200 µm, and the second stage leading to a mean particle size of 10 to 150 µm, preferably 15 to 75 µm.

16. Process according to any one of claims 5 to 15, wherein a combination of at least one mannanase, at least one cellulase and at least one protease enzymes is used.

17. Process according to claim 16, wherein said combinations of enzymes act synergistically to reduce the physical volume of insoluble residue remaining after separation of the extract.

18. Process according to claim 16, wherein said enzymes are essentially devoid of dissaccharidases.

19. Process according to any one of claims 5 to 18, wherein the process is operated in a batch mode.

20. Process according to claim 19, wherein the reaction mixture is separated into a liquid extract substantially reduced in insoluble matter and an insoluble matter stream after essential completion of the enzymatic reaction and before the membrane separation step.

21. Process according to any one of claims 5 to 18, wherein the process is operated in a semi-continuous mode, wherein permeate is withdrawn until the mixture volume diminishes to the point that its viscosity or the pressure drop become high at which point some retentate is purged, and fresh coffee slurry fed and some fresh enzyme added.

22. Process according to any one of claims 5 to 18, wherein the process is operated continuously by continuously adding fresh feed slurry and enzyme and continuously withdrawing a purge of retentate of equal volume from the recycle stream.

23. Process according to any of claims 5 to 22, wherein said separation is performed with at least 1-10% of fine coffee solids being present in the feed to the membrane device.

24. Process according to any one of claims 5 to 23, wherein the cross-flow semi-permeable membrane separation cell comprises microfiltration or ultrafiltration membranes of molecular weight cut-off from 20,000 to 100,000, preferably 30,000 to 50,000.

25. Process according to any one of claims 5 to 24, wherein the cross-flow semi-permeable membrane separation cell comprises a hollow fibre filtration unit or a spiral wound unit or a flat plate unit.

26. Process according to any one of claims 5 to 25, wherein the membrane separation occurs in two stages, wherein the permeate from the cross flow semi-permeable membrane microfiltration separation cell is further processed in a second stage cross flow ultrafiltration cell of molecular weight cut-off from 20,000 to 100,000, preferably from 30,000 to 50,000.

27. Process according to any one of claims 5 to 26, wherein the grounds after the enzymatic reaction are post-treated by a second enzymatic reaction using galactanase and/or a thermal hydrolysis stage at a temperature between 100°C and 180°C.

28. Process according to claim 27, wherein galactanase is added after about 75% of the mannan has been hydrolyzed.

29. Process according to claims 26 or 27, wherein the grounds are separated in a conventional separation step and/or in a membrane separation step.

30. Process according to claim 29, wherein the obtained extract is combined with other extracts obtained in the processes of any one of claims 5 to 29.

31. Process according to any one of claims 5 to 30 wherein the produced coffee extract contains less than 1,000 ppm 5-HMF.

## Patentansprüche

1. Kaffeegetränk-Zusammensetzung, welche frei von signifikanten Anteilen an Öl und unlöslichen Partikeln ist, umfassend
(a) mindestens 15 % bezogen auf das Gesamtgewicht an löslichen Kaffeefeststoffen von insgesamt vorhandener Mannose, wobei der Gehalt an freier Mannose weniger als 50 Gew.-% der insgesamt vorhandenen Mannose beträgt, und
(b) weniger als 250 ppm bezogen auf die gesamten löslichen Kaffeefeststoffe von 5-Hydroxymethylfurfural (5-HMF),
worbei die Zusammensetzung ein löslicher Kaffee ist.

2. Zusammensetzung gemäß Anspruch 1, wobei der Gehalt an freier Mannose weniger als 30 %, vorzugsweise weniger als 20 % bezogen auf das Gewicht der insgesamt vorhandenen Mannose beträgt.

3. Zusammensetzung gemäß einem der Ansprüche 1 bis 2, weiter umfassend Cellooligosaccharide bis zu einem Gehalt von 10 % auf Basis der gesamten löslichen Kaffeefeststoffe.

4. Zusammensetzung gemäß einem der Ansprüche 1 bis 3, welche im Wesentlichen frei von Enzym ist.

5. Verfahren zur Herstellung eines löslichen Kaffeeextrakts, umfassend die Schritte:
(i) Vermengen von geröstetem und gemahlenem Kaffee mit Wasser,
(ii) Zugeben von Mannanasen oder Mischungen von Cellulasen und Mannanasen,
(iii) Nassmahlen zu einer mittleren Partikelgröße von 10-250 µm,
(iv) Behandeln der Reaktionsmischung, indem sie einer Temperatur ausgesetzt wird, bei der das Enzym aktiv ist, und
(v) Zirkulieren der Reaktionsmischung durch eine Trennvorrichtung mit semipermeabler Querstrom-Membran, in welcher der lösliche Kaffeeextrakt als Permeat erhalten wird und wobei die Membranporengröße weniger als 0,8 µm beträgt.

6. Verfahren gemäß Anspruch 5, wobei die Schritte (ii) und (iii) in einer beliebigen Reihenfolge ausgeführt werden können, vorzugsweise Schritt (ii) vor Schritt (iii) ausgeführt wird.

7. Verfahren gemäß Anspruch 5 oder 6, wobei die kumulative Partikelgrößenverteilung des nassgemahlenen gerösteten und gemahlenen Kaffees zu etwa 90 % Partikel unterhalb 150 µm, bevorzugt unterhalb 100 µm und am meisten bevorzugt unterhalb 50 µm enthält.

8. Verfahren gemäß einem der Ansprüche 5 bis 7, wobei eine multimodale Verteilung stufenweise oder kontinuierlich zu der gewünschten Partikelgrößenverteilung vermahlen wird.

9. Verfahren gemäß einem der Ansprüche 5 bis 8, wobei der geröstete und gemahlene Kaffee geröstete Bohnen umfasst, welche zu einer mittleren Partikelgröße von zwischen 500 bis 5000 µm vermahlen wurden.

10. Verfahren gemäß Anspruch 9, wobei der gemahlene Kaffee vorbehandelt wird, um Aromastoffe zu gewinnen, welche zurückbehalten werden, um sie später erhaltenen Extrakten oder extrahierten Feststoffen zuzugeben.

11. Verfahren gemäß einem der Ansprüche 5 bis 8, wobei der geröstete und gemahlene Kaffee zuvor mit Wasser extrahiert und/oder thermisch hydrolisiert wurde.

12. Verfahren gemäß Anspruch 11, wobei der lösliche Kaffeeextrakt, welcher aus den verbrauchten Mahlprodukten in Schritt (v) erhalten wurde, mit dem löslichen Kaffeeextrakt vereint wird, der in dem Extraktionsverfahren aus dem frischen gerösteten und gemahlenen Kaffees erhalten wurde.

13. Verfahren gemäß einem der Ansprüche 11 oder 12, wobei das Extraktionsverfahren bei einer Temperatur von weniger als 140 °C, vorzugsweise zwischen 85 °C und 90 °C durchgeführt wird.

14. Verfahren gemäß einem der Ansprüche 5 bis 13, wobei der erhaltene lösliche Kaffeeextrakt weiter verarbeitet wird, um löslichen Kaffee oder flüssigen Kaffee herzustellen.

15. Verfahren gemäß einem der Ansprüche 5 bis 14, wobei das Nassmahlen in zwei Stufen durchgeführt wird, wobei die erste Stufe zu einer mittleren Teilchengröße von 100 bis 200 µm führt und die zweite Stufe zu einer mittleren Teilchengröße von 10 bis 150 µm, bevorzugt 15 bis 75 µm führt.

16. Verfahren gemäß einem der Ansprüche 5 bis 15, wobei eine Kombination aus wenigstens einem Mannanase-, wenigstens einem Cellulase- und wenigstens einem Protease-Enzym verwendet wird.

17. Verfahren gemäß Anspruch 16, wobei die Kombination von Enzymen synergistisch wirkt, um das physikalische Volumen von nach der Trennung in dem Extrakt verbleibendem unlöslichem Rückstand zu reduzieren.

18. Verfahren gemäß Anspruch 16, wobei die Enzyme im Wesentlichen frei von Disaccharidasen sind.

19. Verfahren gemäß einem der Ansprüche 5 bis 18, wobei das Verfahren im Batch-Modus betrieben wird.

20. Verfahren gemäß Anspruch 19, wobei nach wesentlicher Vollendung der enzymatischen Reaktion und vor dem Membran-Trennungsschritt die Reaktionsmischung in einen flüssigen Extrakt, dessen Gehalt an unlöslichen Stoffen wesentlich reduziert ist, und einen Strom unlöslicher Materie getrennt wird.

21. Verfahren gemäß einem der Ansprüche 5 bis 18, wobei das Verfahren in einem halbkontinuierlichen Modus betrieben wird, bei welchem Permeat entnommen wird, bis das Volumen der Mischung bis zu dem Punkt verringert ist, dass deren Viskosität oder der Druckabfall hoch wird, zu welchem Punkt ein Teil des Retentats abgeführt und frische Kaffeeaufschlämmung zugeführt und etwas frisches Enzym zugegeben wird.

22. Verfahren gemäß einem der Ansprüche 5 bis 18, wobei das Verfahren kontinuierlich durch kontinuierliche Zugabe von frischer Zufuhr-Aufschlämmung und Enzym und kontinuierlichem Abzug eines Retentatstroms gleichen Volumens aus dem Rücklaufstrom durchgeführt wird.

23. Verfahren gemäß einem der Ansprüche 5 bis 22, wobei die Trennung durchgeführt während mindestens 1 bis 10 % von feinteiligen Kaffeefeststoffen in der Zuführung zur Membranvorrichtung vorhanden sind.

24. Verfahren gemäß einem der Ansprüche 5 bis 23, wobei die Trennzelle mit semipermeabler Querstrom-Membran Mikrofiltrations- oder Ultrafiltrationsmembranen mit einer Molekulargewichts-Ausschlussgrenze von 20.000 bis 100.000, bevorzugt 30.000 bis 50.000 umfasst.

25. Verfahren gemäß einem der Ansprüche 5 bis 24, wobei die Trennzelle mit semipermeabler Querstrom-Membran eine Hohlfaserfiltrationseinheit oder eine spiralgewickelte Einheit oder eine Flachplatteneinheit umfasst.

26. Verfahren gemäß einem der Ansprüche 5 bis 25, wobei die Membrantrennung in zwei Stufen erfolgt, worin das Permeat aus der Querfluss-Mikrofiltrationstrennzelle mit semipermeabler Querstrom-Membran in einer zweiten Stufe in einer Querfluss-Ultrafiltrationszelle mit einer Molekulargewichts-Ausschlussgrenze von 20.000 bis 100.000, bevorzugt von 30.000 bis 50.000 behandelt wird.

27. Verfahren gemäß einem der Ansprüche 5 bis 26, wobei das Mahlgut nach der enzymatischen Reaktion mittels einer zweiten enzymatischen Reaktion unter Verwendung von Galactanase und/oder einer thermischen Hydrolysestufe bei einer Temperatur zwischen 100 °C und 180 °C nachbehandelt wird.

28. Verfahren gemäß Anspruch 27, wobei Galactanase zugegeben wird, nachdem ungefähr 75 % des Mannans hydrolysiert worden sind.

29. Verfahren gemäß Anspruch 26 oder 27, wobei das Mahlgut in einem herkömmlichen Trennschritt und/oder einem Membrantrennschritt aufgetrennt wird.

30. Verfahren gemäß Anspruch 29, wobei der erhaltene Extrakt mit anderen in den Verfahren gemäß einem der Ansprüche 5 bis 29 erhaltenen Extrakten kombiniert wird.

31. Verfahren gemäß einem der Ansprüche 5 bis 30, wobei der erzeugte Kaffeeextrakt weniger als 1000 ppm 5-HMF enthält.

## Revendications

1. Composition de café buvable étant exempte de teneur significative en huile et en particules insolubles, comprenant :
(a) au moins 15 % en poids, sur la base du poids total des solides de café soluble, de mannose total, dans laquelle la teneur en mannose libre est inférieure à 50 % en poids de la teneur totale en mannose, et
(b) moins de 250 ppm, sur la base de solides totaux de café soluble, de 5-hydroxyméthylfurfural (5-HMF),
où la composition est du café soluble.

2. Composition selon la revendication 1, dans laquelle la teneur en mannose libre est inférieure à 30 %, de préférence inférieure à 20 % du poids de mannose total.

3. Composition selon l'une quelconque des revendications 1 et 2, comprenant également des cello-oligosaccharides en une teneur pouvant aller jusqu'à 10 % sur la base des solides totaux de café soluble.

4. Composition selon l'une quelconque des revendications 1 à 3, étant essentiellement exempte d'enzyme.

5. Procédé de production d'un extrait de café soluble, comprenant les étapes consistant :
(i) à combiner du café torréfié et moulu avec de l'eau,
(ii) à ajouter des mannanases ou des mélanges de cellulases et de mannanases,
(iii) à broyer par voie humide jusqu'à une taille moyenne de particule de 10 à 250 µm,
(iv) à traiter le mélange réactionnel en l'exposant à une température à laquelle l'enzyme est active, et
(v) à faire circuler le mélange réactionnel dans un dispositif de séparation à membrane semi-perméable à écoulements croisés dans lequel l'extrait de café soluble est obtenu en tant que perméat, et dans lequel la taille de pore de membrane est inférieure à 0,8 µm.

6. Procédé selon la revendication 5, dans lequel les étapes (ii) et (iii) peuvent être effectuées dans un ordre quelconque, l'étape (ii) étant de préférence effectuée avant l'étape (iii).

7. Procédé selon la revendication 5 ou 6, dans lequel la distribution de tailles de particule cumulée du café torréfié et moulu broyé par voie humide comprend environ 90 % des particules inférieures à 150 µm, de préférence inférieures à 100 µm, et de façon particulièrement préférée inférieures à 50 µm.

8. Procédé selon l'une quelconque des revendications 5 à 7, dans lequel une distribution multimodale est moulue par étape ou en continu jusqu'à la distribution de tailles de particules souhaitée.

9. Procédé selon l'une des revendications 5 à 8, dans lequel le café torréfié et moulu comprend des grains torréfiés qui ont été broyés jusqu'à une taille moyenne de particules comprise entre 500 et 5000 µm.

10. Procédé selon la revendication 9, dans lequel le café moulu est prétraité pour récupérer des composés aromatiques qui sont conservés pour être ajoutés à des extraits ou à des solides extraits obtenus plus tard.

11. Procédé selon l'une des revendications 5 à 8, dans lequel le café torréfié et moulu a été préalablement extrait avec de l'eau et/ou hydrolysé par voie thermique.

12. Procédé selon la revendication 11, dans lequel l'extrait de café soluble obtenu à partir des résidus de mouture de l'étape (v) est combiné avec l'extrait de café soluble qui a été obtenu dans le procédé d'extraction du café fraîchement torréfié et moulu.

13. Procédé selon la revendication 11 ou 12, dans lequel le procédé d'extraction est réalisé à une température inférieure à 140°C, de préférence entre 85°C et 90°C.

14. Procédé selon l'une quelconque des revendications 5 à 13, dans lequel l'extrait de café soluble obtenu est traité pour produire du café soluble ou du café liquide.

15. Procédé selon l'une quelconque des revendications 5 à 14, dans lequel le broyage par voie humide est réalisé en deux étapes, la première étape donnant une taille moyenne de particule de 100 à 200 µm, et la deuxième étape donnant une taille de particule moyenne de 10 à 150 µm, de préférence de 15 à 75 µm.

16. Procédé selon l'une quelconque des revendications 5 à 15, dans lequel on utilise une combinaison d'au moins une enzyme mannanase, au moins une enzyme cellulase et au moins une enzyme protéase.

17. Procédé selon la revendication 16, dans lequel lesdites combinaisons d'enzymes ont un effet de synergie pour réduire le volume physique du résidu insoluble restant après la séparation de l'extrait.

18. Procédé selon la revendication 16, dans lequel lesdites enzymes sont essentiellement exemptes de dissacharidases.

19. Procédé selon l'une quelconque des revendications 5 à 18, dans lequel le procédé est effectué en mode par lots.

20. Procédé selon la revendication 19, dans lequel le mélange réactionnel est séparé en un extrait liquide sensiblement réduit en matière insoluble et en un courant de matière insoluble après achèvement essentiel de la réaction enzymatique et avant l'étape de séparation membranaire.

21. Procédé selon l'une quelconque des revendications 5 à 18, dans lequel le procédé est effectué en mode semi-continu, dans lequel le perméat est retiré jusqu'à ce que le volume de mélange diminue jusqu'au point où sa viscosité ou jusqu'à ce que la baisse de pression devienne élevée, auquel point une partie du rétentat est purgée, et une suspension de café frais est alimentée et un peu d'enzyme fraîche est ajoutée.

22. Procédé selon l'une quelconque des revendications 5 à 18, dans lequel le procédé est effectué en continu en ajoutant continuellement une suspension d'alimentation et de l'enzyme fraîches, et en retirant continuellement une purge de rétentat d'un volume égal au courant recyclé.

23. Procédé selon l'une des revendications 5 à 22, dans lequel ladite séparation est réalisée avec au moins 1 à 10 % de fins solides de café présents dans l'alimentation fournie au dispositif membranaire.

24. Procédé selon l'une quelconque des revendications 5 à 23, dans lequel la cellule de séparation à membrane semi-perméable à écoulements croisés comprend des membranes de microfiltration et d'ultrafiltration d'un seuil de masse moléculaire de 20 000 à 100 000, de préférence de 30 000 à 50 000.

25. Procédé selon l'une quelconque des revendications 5 à 24, dans lequel la cellule de séparation à membrane semi-perméable à écoulements croisés comprend une unité de filtration à fibre creuse ou une unité spiralée ou une unité plane.

26. Procédé selon l'une quelconque des revendications 5 à 25, dans lequel la séparation membranaire s'effectue en deux étapes, dans lequel le perméat de la cellule de séparation par microfiltration membranaire semi-perméable à écoulements croisés est traité en outre dans une deuxième étape dans une cellule d'ultrafiltration à écoulements croisés ayant un seuil de masse moléculaire de 20000 à 100000, de préférence de 30000 à 50000.

27. Procédé selon l'une quelconque des revendications 5 à 26, dans lequel les résidus de mouture après la réaction enzymatique sont post-traités par une deuxième réaction enzymatique en utilisant de la galactanase et/ou une étape d'hydrolyse thermique à une température comprise entre 100°C et 180°C.

28. Procédé selon la revendication 27, dans lequel la galactanase est ajoutée après qu'environ 75 % de la mannane a été hydrolysée.

29. Procédé selon la revendication 26 ou 27, dans lequel les résidus de mouture sont séparés dans une étape de séparation conventionnelle et/ou dans une étape de séparation membranaire.

30. Procédé selon la revendication 29, dans lequel l'extrait obtenu est combiné avec d'autres extraits obtenus dans les procédés de l'une quelconque des revendications 5 à 29.

31. Procédé selon l'une quelconque des revendications 5 à 30, dans lequel l'extrait de café produit contient moins de 1000 ppm de 5-HMF.
